# EUROPEAN PATENT SPECIFICATION

(11) **EP 3 532 684 B1**
(45) Date of publication and mention of the grant of the patent: **24.06.2020**
(21) Application number: 17712975.6
(22) Date of filing: 22.03.2017
(51) Int. Cl.: E04H 4/14, E04H 4/16, F16L 55/10

(54) **AUTOMATIC SHUT-OFF DEVICE**
AUTOMATISCHE ABSCHALTVORRICHTUNG
DISPOSITIF D'ARRÊT AUTOMATIQUE

(30) Priority: 27.10.2016 DE 102016012918
(43) Date of publication of application: 04.09.2019
(73) Proprietor: Husqvarna AB, 561 82 Huskvarna (SE)
(72) Inventor: CLAUS, Ralf, 89171 Illerkirchberg (DE)
(74) Representative: Finkele, Rolf
(86) International application number: PCT/EP2017/056844
(87) International publication number: WO 2018/077485

(56) References cited:
- GB-A- 931 047
- US-A- 2 310 631
- US-A- 2 420 341

## Description

The present invention relates generally to the field of automatic shut-off devices. More specifically, the present invention is related to a shut-off device for filling vessels with a liquid.

### BACKGROUND OF THE INVENTION

Automatic shut-off devices for filling vessels with a liquid, specifically water, are known in prior art. Specifically, shut-off devices are known which use the principle of buoyancy for stopping the provision of liquid. For example, a floating entity with a density lower than the density of water swims on the water surface thereby detecting the water level. Based on the position of the floating entity, a liquid valve is controlled which enables/disables the water flow. Mostly, the flow rate of shut-off devices using the principle of buoyancy depends on the water level, i.e. in case of low water level, the flow rate is high and decreases with rising water level. So, in case of a liquid level close to the desired maximum filling level, the flow rate is very low which significantly increases the filling duration.

In addition, known shut-off devices have to be mounted to the vessel wall. However, such mounting is not possible in case of flexible, air-filled walls, e.g. the wall of an inflatable pool.

GB 931 047 A discloses a shut-off device wherein the main valve member is closed when the liquid jet through the nozzle is interrupted to the deflector, because the chamber is invaded by liquid through a pipe. Also US 2 310 631 A discloses a shut-off device. This device incorporates two valves, wherein the closing mechanism is realized by a valve and an associated arm, tube and plunger. Instead of being said to be a valve this portion of the device can also be considered as forming a deflecting portion for the liquid jet through what is a primary nozzle.

US 2 420 341 A describes venturi jet pumps that are foreseen to produce a vacuum in order to move a diaphragm to release a mechanism.

### SUMMARY OF THE INVENTION

It is an objective of the embodiments of the present invention to provide an automatic shut-off device which does not show a steadily decreasing flow rate with increasing filling level and can be flexibly used without a solid mounting at the vessel wall. The objective is solved by the features of the independent claim. Preferred embodiments are given in the dependent claims. If not explicitly indicated otherwise, embodiments of the invention can be freely combined with each other.

According to an aspect, the invention relates to an automatic shut-off device for filling a container with a liquid. The shut-off device comprises:
- a housing including a valve for enabling a liquid flow through a liquid path provided within the housing;
- a control element for opening the valve in order to enable a liquid flow through the liquid path; and
- a closing mechanism for automatically closing the valve dependent on the liquid level within the container.

The closing mechanism comprises a deflector portion arranged within the housing for receiving a liquid jet, said deflector portion being coupled with a lever, said lever being operatively coupled with the valve. The shut-off device further comprises liquid jet variation means configured to vary the force of the liquid jet applied to the deflector portion depending on the liquid level within the container. The lever is configured to control the valve based on the force of the liquid jet applied to the deflector portion.

Said automatic shut-off device is advantageous because the closing mechanism is included in the housing of the shut-off device and no floating entity is used for measuring the liquid level but the force applied by the liquid jet to the deflector portion is varied depending on the liquid level. Thereby, the effort for installing the floating entity is avoided.

According to embodiments, the lever is adapted to keep the valve in an open position if the force applied to the deflector portion is above a certain threshold. Said threshold may be defined by the force of a spring coupled with the valve. So, if the force caused by the liquid jet at the deflector portion and forwarded by the lever exceeds the spring force, the valve remains in the open position. Otherwise, the valve closes because of the spring force acting on the valve.

According to embodiments, the valve is spring-loaded, the spring being preloaded to push a valve portion in the closed position. So, the spring force and the force transferred by the lever because of the liquid jet applied to the deflector portion are directed in opposite directions. Thereby, an automatic closing is possible if the force provided by the lever drops below the spring force.

According to embodiments, the lever is coupled with the valve via a tappet. Said tappet may protrude from a side portion of the shut-off device into the interior of the housing in which the valve is located. Said tappet may be coupled with a valve portion, e.g. a valve plunger, a valve body or a membrane (membrane valve) in order to open/close the valve.

According to embodiments, the lever is pivotally coupled with the housing. So, the lever can be swivelled in a first position in which the valve is open and in a second position, in which the valve is closed. The swivelling of the lever may be performed around a pivot axis which is arranged perpendicular or essentially perpendicular to the flow direction of the liquid through the shut-off device. Thereby, the force applied to the deflector portion can be transferred upstream to a location at which the valve is located.

According to embodiments, a nozzle is provided within the liquid path in flow direction upstream the deflector portion. The nozzle may be adapted to provide a focussed liquid jet which is applied downstream to the deflector portion. Said focussing may be obtained by a nozzle with a tapered nozzle channel, i.e. the width or diameter of the nozzle channel decreases towards the nozzle outlet. Thereby a high-power liquid jet is provided to the deflector portion.

According to embodiments, the nozzle comprises one or more rips extending into the nozzle channel. The ribs may be longitudinal ribs extending along the whole or essentially the whole length of the nozzle. Thereby, the focusing of the jet can be improved.

According to embodiments, a channel portion is provided downstream the nozzle, the channel portion comprising a width or diameter greater than the width or diameter of the nozzle channel. Said channel portion forms part of the liquid jet variation means. Due to the greater width or diameter, mixing of air/liquid can be achieved within said channel portion.

According to embodiments, the channel portion forms a mixing chamber for adding air or liquid to the liquid jet through an inner injection opening provided within the wall of the mixing chamber. Preferably, the opening may be provided close, specifically in direct proximity to the nozzle. Said opening may provide a feed opening through which air or liquid can be fed in in radial direction (radial with respect to the flow direction of the liquid jet through the channel portion).

Preferably, the length of the channel portion may be greater than the length of the nozzle channel. Thereby, the mixing of air/liquid with the liquid jet can be improved.

According to embodiments, an intermediate chamber or channel is provided between the channel portion and an outer housing wall. The medium to be mixed with the liquid jet is sucked through said intermediate chamber into the channel portion. Thereby it is possible to create a distance between an opening in the housing wall (through which the medium is sucked into the housing from the surrounding environment) and the inner injection opening.

According to embodiments, an outer injection opening is provided at the outer housing wall, said outer injection opening being fluidly coupled with the inner injection opening via said intermediate chamber or channel. Said outer injection opening may be arranged at a distance (measured along the flow direction of the liquid jet) to the inner injection opening. For example, the inner injection opening may be arranged close to the nozzle performing the forming of the liquid jet and the outer injection opening may be arranged close to a jet forming portion, i.e. at the opposite end of the channel portion.

Through said outer injection opening, depending on the liquid level within the vessel to be filled, air or liquid is sucked in. The sucked-in air does not lower the force of the liquid jet applied to the deflector portion such that the valve is closed. However, in case that the liquid level rises such that the outer injection opening is covered by liquid, liquid is sucked in, said sucked-in liquid lowering the force of the liquid jet. As a result, the valve closes automatically.

According to embodiments, liquid retarding means or pressure reduction means are provided within the housing. Said liquid retarding means/pressure reduction means may be adapted to retard a strong water flow caused by a high liquid pressure by generating turbulences within the liquid flow. Thereby it can be avoided that in case of high liquid pressure the liquid jet variation means can not lower the force of the liquid jet such that the valve closes when liquid is sucked into the mixing chamber.

According to embodiments, said liquid retarding means or pressure reduction means are formed by a grid comprising multiple elongated holes. According to other embodiments, the liquid retarding means or pressure reduction means may be any means adapted to limit the liquid pressure provided to the nozzle, respectively, to the deflector portion.

According to embodiments, the shut-off device comprises a jet forming portion downstream the deflector portion, said jet forming portion being adapted to collect the liquid deflected by the deflector portion. For example, the jet forming portion may be double-hopper shaped, i.e. the liquid deflected by the deflector portion is on the one hand collected and on the other hand guided to a liquid dispensing opening provided at the jet forming portion. For example, the jet forming portion may comprise a concave interior surface along which the liquid is guided towards the liquid dispensing opening.

According to embodiments, the shut-off device comprises a quick connector portion in order to couple the shut-off device with a water hose. Thereby it is possible to couple the shut-off device with the free end of a water hose. In order to fill a certain vessel, the shut-off device coupled with the water hose is inserted into the vessel. In case that the liquid level reaches the outer injection opening, the filling process is automatically stopped.

The term "vessel" according to the present disclosure refers to any container which can be filled with liquid, specifically water cans, buckets, pools etc.

The term "essentially" or "approximately" as used in the invention means deviations from the exact value by +/- 10%, preferably by +/- 5% and/or deviations in the form of changes that are insignificant for the function.

### BRIEF DESCRIPTION OF THE DRAWINGS

The various aspects of the invention, including its particular features and advantages, will be readily understood from the following detailed description and the accompanying drawings, in which:
- Fig. 1: illustrates an embodiment of an automatic shut-off device in a perspective view;
- Fig. 2: illustrates the automatic shut-off device of Fig. 1 in a side view;
- Fig. 3: illustrates the automatic shut-off device of Fig. 1 in a first sectional view in a cutting plane parallel to the flow direction of the liquid; and
- Fig. 4: illustrates the automatic shut-off device of Fig. 1 in a second sectional view in a cutting plane parallel to the cutting plane of Fig. 3.

### DETAILED DESCRIPTION OF PREFERRED EMBODIMENTS

The present invention will now be described more fully with reference to the accompanying drawings, in which example embodiments are shown. However, this invention should not be construed as limited to the embodiments set forth herein. Throughout the following description similar reference numerals have been used to denote similar elements, parts, items or features, when applicable.

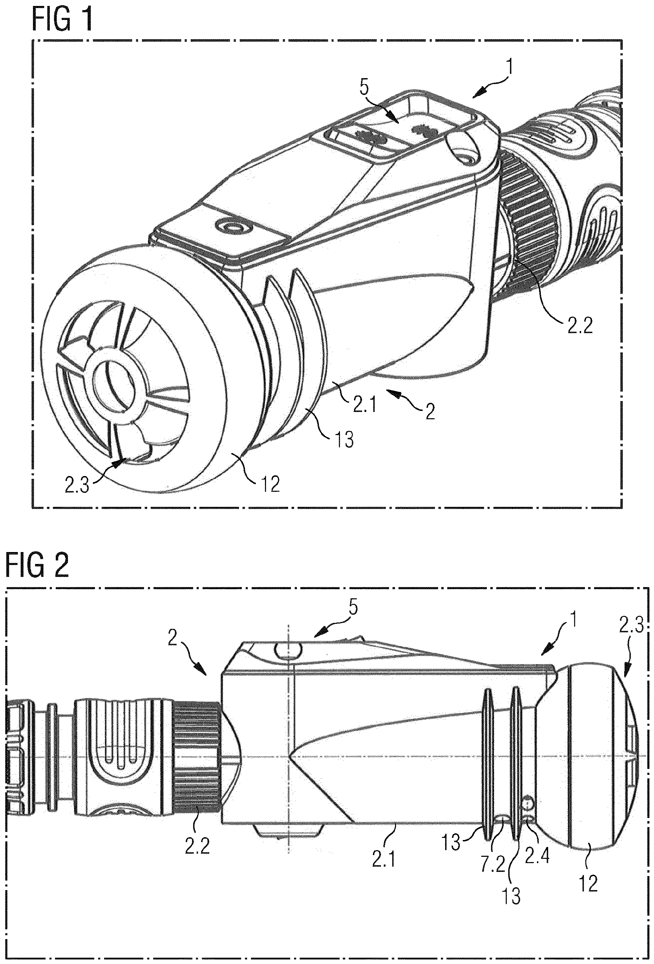

Fig. 1 and 2 illustrate an embodiment of an automatic shut-off device 1. The automatic shut-off device 1 according to the present embodiment is adapted to be coupled with a water hose. So, for filling a vessel, e.g. a watering can, a bucket or a pool with liquid, specifically with water, the automatic shut-off device 1 is coupled with the free end of the water hose and said automatic shut-off device 1 is put into the vessel. For example, the automatic shut-off device 1 comprises a quick connector portion 2.2 for coupling the automatic shut-off device 1 with the water hose, specifically, with a quick connector arranged at the water hose.

The automatic shut-off device 1 comprises a housing 2, in which a liquid path 4 is provided. Said liquid path 4 extends from a liquid input, for example, provided at the quick connector portion 2.2 to a liquid dispensing opening 2.3. The liquid dispensing opening 2.3 may be provided opposite to the quick connector portion 2.2.

In order to control the provision of liquid by means of the automatic shut-off device 1, a valve 3 is provided within the housing 2. The valve 3 is adapted to control the liquid flow through the liquid path 4. At the housing 2, a control element 5 is provided for controlling a valve element, e.g. a valve body in order to enable a liquid flow through the liquid path 4 and thereby the provision of liquid at the liquid dispensing opening 2.3. For example, the valve 3 may be a membrane valve comprising a membrane for opening/closing the liquid path through the valve 3. The control element 5 may be, for example, a control switch, control button etc.

In order to automatically close the valve 3 when the liquid within the vessel reaches a certain liquid level, the automatic shut-off device 1 comprises a closing mechanism 6. For example, the closing mechanism 6 may work according to the scales principle. In other words, the state of the valve (e.g. open or closed) depends on a comparison of different forces, namely a first force caused by the liquid jet and a second force counteracting said first force. Thereby, no floating body is necessary which controls the valve 3.

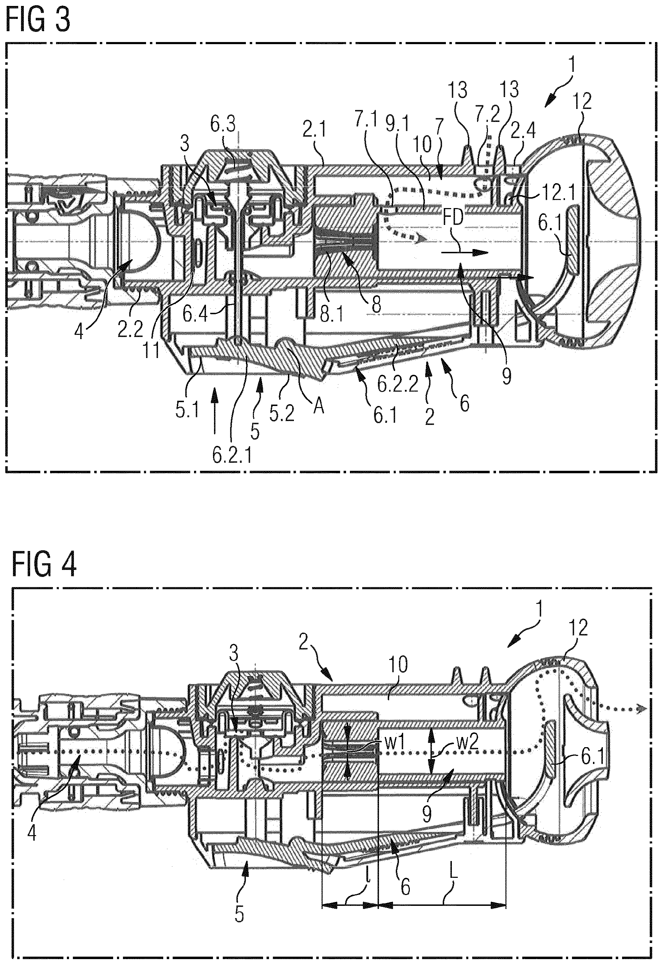

In the following, the working principle of the automatic shut-off device 1 is explained in closer detail based on the features shown in Fig. 3 and 4. In Fig. 4, the liquid path 4 through the automatic shut-off device 1 is shown based on the dotted line. The liquid is received at the quick connector portion 2.2 and provided through a liquid channel to the valve 3. In case that the valve is in an open position (effected by a respective input at the control element), the liquid is guided to a nozzle 8. Said nozzle 8 may be configured to provide a focussed liquid jet at its output. For example, the nozzle 8 may have a nozzle channel with a width w1 or diameter smaller than the liquid channel upstream said nozzle 8. More in detail, the nozzle 8 may comprise a tapered nozzle channel, i.e. the width w1 or diameter of the nozzle orifice decreases in flow direction FD. The nozzle 8 may comprise multiple ribs 8.1 or bars extending into the nozzle channel. The ribs 8.1 may be longitudinal ribs comprising a longitudinal side extending parallel or essentially parallel to the flow direction FD of the liquid. According to other embodiments, the ribs 8.1 may be twisted in order to provide a spiral liquid guide.

Downstream the nozzle 8, specifically directly behind the nozzle 8, a channel portion 9 is provided which comprises a width w2 greater than the width w1 of the nozzle channel. More in detail, there may be an abrupt, step-like increase of the width of the liquid channel from the nozzle 8 to the channel portion 9. For example, the channel portion 9 may be a tubular-shaped liquid path portion which may be formed by a wall 9.1 comprising a circular or essentially circular cross section. Said channel portion 9 may be arranged centred with respect to the nozzle channel. The length L of the channel portion 9 (measured along the flow direction) is greater than the length 1 of the nozzle 8. The channel portion 9 may form a mixing chamber in which air or liquid is mixed into the liquid jet provided by the nozzle 8 depending on the liquid level within the vessel. The working principle of said mixing chamber is described below in greater detail.

Downstream the nozzle 8, respectively, the channel portion 9, a deflector portion 6.1 is provided. The deflector portion 6.1 may comprise a plate-like shape. The surface of the deflector portion 6.1 may be arranged such that the liquid jet provided by the nozzle 8 through the channel portion 9 impinges vertically or essentially vertically at the deflector portion 6.1. The deflector portion 6.1 may comprise a diameter greater than the width w1 of the nozzle channel. Specifically, the diameter of the deflector portion 6.1 may be chosen equal or essentially equal to the width w2 of the channel portion 9.

After leaving the channel portion 9, the liquid jet hits the deflector portion 6.1. Thereby, the liquid jet is laterally deflected. More in detail, the liquid jet is splashed onto the deflector portion 6.1 thereby applying a force onto the deflector portion 6.1. Said force is applied in a direction parallel to the flow direction FD of the liquid jet provided by the nozzle 8.

After splashing onto the deflector portion 6.1, the laterally deflected liquid jet is received by a jet forming portion 12. Said jet forming portion 12 may comprise a curved shape. More in detail, the jet forming portion 12 may comprise a double-hopper-like shape. Thereby, on the one hand, the radially deflected liquid is collected and, on the other hand, guided to the liquid dispensing opening 2.3 in a focussed way.

The closing mechanism 6 comprises means for comparing the force applied to the deflector portion 6.1 which is used to keep the valve 3 open with a force working in the opposite direction, i.e. trying to close the valve 3. For example, the valve 3 may be spring-loaded, i.e. a force applied by a spring 6.3 acts on a valve element in order to close the valve 3 thereby stopping the liquid jet. In order to be able to compare the force applied to the deflector portion 6.1 and the force applied by the spring 6.3 on the valve element, the closing mechanism 6 comprises a lever 6.2. Said lever 6.2 may be movably mounted within the housing 2. More in detail, said lever 6.2 may be pivotally mounted within the housing 2. The lever 6.2 may comprise two lever arms 6.2.1, 6.2.2 which are coupled in the area of a pivot axis A of said lever 6.2. Said pivot axis A may be arranged in an area between the valve 3 and the deflector portion 6.1 and may be orientated perpendicular or essentially perpendicular to the flow direction FD of the liquid. A first free end of the lever 6.2 (second lever arm 6.2.2) may be coupled with the deflector portion 6.1. The second free end of the lever 6.2 (first lever arm 6.2.1) may be operatively coupled with the valve 3. Said lever 6.2 may comprise a longitudinal shape and may extend with its longitudinal axis along the longitudinal axis of the automatic shut-off device 1.

The coupling of the lever 6.2 with the valve 3 is obtained by a tappet 6.4. Said tappet 6.4 may be a pin-shaped coupling mean which is movably, specifically slidably mounted within the housing 2. Said tappet 6.4 may be arranged transversely to the flow direction FD. By means of said tappet 6.4, the first lever arm 6.2.1 opposite to the deflector portion 6.1 is coupled with the valve element thereby being able to open/close the valve 3.

Referring to fig. 3 and 4, in the following, the variation of the force applied by the liquid jet to the deflector portion 6.1 is described in closer detail.

The automatic shut-off device 1 comprises variation means 7 for varying the force applied by the liquid jet to the deflector portion 6.1 depending on the liquid level within the vessel. The wall 9.1 of the channel portion 9 comprises one or more injection openings 7.1, in the following referred to as inner injection opening. Said inner injection opening 7.1 may be arranged in close proximity to the nozzle 8, i.e. immediately downstream the nozzle 8. The inner injection opening 7.1 may provide an opening in the wall 9.1 of the channel portion 9 in a radial direction with respect to the flow direction (lateral opening).

Between the wall 9.1 and an outer housing wall 2.1, an intermediate chamber 10 is provided. In the outer housing wall 2.1, an outer injection opening 7.2 is provided. Said outer injection opening 7.2 is arranged at a distance to the inner injection opening 7.1, said distance being measured along the flow direction FD. For example, the inner injection opening 7.1 may be arranged close to the nozzle 8 and the outer injection opening 7.2 may be arranged close to the jet forming portion 12.

As shown by the dotted line in Fig. 3, a medium can be sucked in through the outer injection opening 7.2, the intermediate chamber 10 and the inner injection opening 7.1. Said suction power is caused by the liquid jet provided through the channel portion 9.

First, the situation is considered that the housing 2 is not immerged in the liquid received within the vessel. In that case, the outer injection opening 7.2 is not covered by liquid. As such, air is sucked into the intermediate chamber 10 and provided through the inner injection opening 7.1 into the channel portion 9. The air is mixed with the liquid jet. However, the force applied by the liquid jet mixed with the sucked-in air holds the valve 3 in the open position. So, in other words, the force provided by the lever 6.2 to the tappet 6.4 (caused by the liquid jet at the deflector portion 6.1) exceeds the spring force. Therefore, the valve remains open and the liquid level within the vessel is rising.

When the liquid level reaches the outer injection opening 7.2, instead of air, liquid is sucked in. Said liquid is provided through the inner injection opening 7.1 into the channel portion 9. Thereby, the liquid jet provided by the nozzle 8 is disturbed by the sucked-in liquid. Said disturbance causes a reduction of the force of the liquid jet provided to the deflector portion 6.1. As a result, the force of the spring 6.3 applied to the valve 3 exceeds the force applied by the lever 6.2 to the valve 3. Thereby, the valve 3 is closed and the provision of liquid into the vessel is automatically stopped. So, after manually opening the valve 3 by operating the control element 5 (as indicated by the arrow in Fig. 3), the valve 3 remains open until the liquid level reaches the outer injection opening 7.2. Due to the disturbance of the liquid jet, the force of the liquid jet provided to the deflection portion 6.1 and forwarded by the lever 6.2 is reduced causing the closing of the valve 3 and thereby the automatic stop of the fluid supply.

In the present embodiment, the control element 5 is formed by at least a portion of the first lever arm 6.2.1 of the lever 6.2. By pressing the control element 5 into the housing (as indicated by the arrow), the spring 6.3 is compressed and the valve 3 is opened. Based on the upper-mentioned provision of force by the liquid jet onto the deflector portion 6.1, the valve is stabilized in the open position. So, in other words, the lever 6 does not only provide a transfer of the force applied at the deflector portion 6.1 to the valve 3 but forms also the control element 5.

Preferably, also a portion of the second lever arm 6.2.2 is accessible and can be operated by a user in order to be able to manually stop the provision of liquid into the vessel. As shown in Fig. 3 and 4, a first portion 5.1 of the control element 5 is arranged upstream the pivot axis A and a second portion 5.2 of the control element 5 is arranged downstream the pivot axis A. Thus, by pressing the first portion 5.1, the valve 3 can be opened and by pressing the second portion 5.2, the valve 3 can be manually closed.

In order to avoid that the outer injection opening 7.2 is sealed by an object, e.g. a leaf or the wall of the vessel to be filled with liquid, one or more projections 13 are provided in the area of the outer injection opening 7.2. In the present embodiment, a pair of projections 13 is provided close to the outer injection opening 7.2 wherein the first projection 13 is provided at a first side of the outer injection opening 7.2 and a second projection 13 is provided at the opposite side of the outer injection opening 7.2. Said projections 13 may comprise a rib-like cross section and may comprise a ring-like shape thereby at least partly surrounding the shut-off device 1.

In order to avoid that due to a high pressure of the liquid jet the disturbance provided by the liquid sucked in through the inner injection opening 7.1 does not lead to a closing of the valve 3, the automatic shut-off device 1 comprises liquid retarding means 11. In the present embodiment, the liquid retarding means 11 are provided upstream the valve 3, i.e. between the quick connector portion 2.2 and the valve 3. However, said liquid retarding means 11 can also be arranged at another position, for example, between the valve 3 and the nozzle 8. The liquid retarding means 11 may be adapted to cause turbulences within the liquid jet. For example, the liquid retarding means 11 may be build by a grid comprising one or more long holes causing such turbulences within a high pressure liquid jet.

According to embodiments, the jet forming portion 12 comprises an opening 12.1. Liquid provided to the jet forming portion 12 may splash back. By means of the opening 12.1, the back-splashing water is at least partially branched off in order to avoid that the back-splashing water undesirably flows out at a housing opening, e.g. the opening providing access to the control element 5. Said opening 12.1 may be provided opposite or essentially opposite to the liquid dispensing opening 2.3. The branched-off amount of liquid is output at an opening 2.4 of the housing 2. Said opening 2.4 may be arranged close to the outer injection opening 7.2. More in detail, the opening 2.4 may be provided between the jet forming portion 12 and the outer injection opening 7.2. The opening 2.4 may be separated from the outer injection opening 7.2 by means of a projection 13 thereby avoiding that liquid output at the opening 2.4 can be sucked into the outer injection opening 7.2.

In order to enable a manually cleaning of the shut-off device 1, the shut-off device 1 can be disassembled. Specifically, the jet forming portion 12 or other portions of the shut-off device 1 can be unscrewed in order to clean interior portions of the shut-off device 1.

It should be noted that the description and drawings merely illustrate the principles of the proposed automatic shut-off device. Those skilled in the art will be able to implement various arrangements that, although not explicitly described or shown herein, embody the principles of the invention.

### List of reference numerals

- 1: shut-off device
- 2: housing
- 2.1: outer housing wall
- 2.2: quick connector portion
- 2.3: liquid dispensing opening
- 2.4: opening
- 3: valve
- 4: liquid path
- 5: control element
- 5.1: first portion of the control element
- 5.2: second portion of the control element
- 6: closing mechanism
- 6.1: deflector portion
- 6.2: lever
- 6.2.1: first lever arm
- 6.2.2: second lever arm
- 6.3: spring
- 6.4: tappet
- 7: variation means
- 7.1: inner injection opening
- 7.2: outer injection opening
- 8: nozzle
- 8.1: rib
- 9: channel portion
- 9.1: wall
- 10: intermediate chamber
- 11: liquid retarding means
- 12: jet forming portion
- 12.1: opening
- 13: projection

- A: pivot axis
- FD: flow direction
- 1: length of the nozzle
- L: length of the channel portion
- w1: width of the nozzle channel
- w2: width of the channel portion

## Claims

1. Shut-off device for filling a container with a liquid, the shut-off device (1) comprising:
- a housing (2) including a valve (3) for enabling a liquid flow through a liquid path (4) provided within the housing (2);
- a control element (5) for opening the valve (3) in order to enable a liquid flow through the liquid path (4); and
- a closing mechanism (6) for automatically closing the valve (3) dependent on the liquid level within the container;
wherein the closing mechanism (6) comprises a deflector portion (6.1) arranged within the housing for receiving a liquid jet, said deflector portion (6.1) being coupled with a lever (6.2), said lever (6.2) being operatively coupled with the valve (3),
**characterized in that**
the shut-off device (1) further comprises liquid jet variation means (7) configured to vary the force of the liquid jet applied to the deflector portion (6.1) depending on the liquid level within the container
and wherein the lever (6.2) is configured to control the valve (3) based on the force of the liquid jet applied to the deflector portion (6.1).

2. Shut-off device according to claim 1, wherein the lever (6.2) is adapted to keep the valve (3) in an open position if the force applied to the deflector portion (6.1) is above a certain threshold.

3. Shut-off device according to claim 1 or 2, wherein the valve (3) is spring-loaded, the spring (6.3) being preloaded to push a valve portion in the closed position.

4. Shut-off device according to anyone of the preceding claims, wherein the lever (6.2) is coupled with the valve (3) via a tappet (6.4).

5. Shut-off device according to anyone of the preceding claims, wherein the lever (6.2) is pivotally coupled with the housing (2) .

6. Shut-off device according to anyone of the preceding claims, wherein a nozzle (8) is provided within the liquid path (4) in flow direction upstream the deflector portion (6.1).

7. Shut-off device according to claim 6, wherein the nozzle (8) comprises one or more rips (8.1) extending into the nozzle channel.

8. Shut-off device according to claim 6 or 7, wherein a channel portion (9) is provided downstream the nozzle (8), the channel portion (9) comprising a width or diameter (w1) greater than the width or diameter (w2) of the nozzle channel.

9. Shut-off device according to claim 8, wherein the channel portion (9) forms a mixing chamber for adding air or liquid to the liquid jet through an inner injection opening (7.1) provided within the wall (9.1) of the mixing chamber.

10. Shut-off device according to claim 8 or 9, wherein an intermediate chamber (10) or channel is provided between the channel portion (9) and an outer housing wall (2.1).

11. Shut-off device according to claim 10, wherein an outer injection opening (7.2) is provided at the outer housing wall (2.1), said outer injection opening (7.2) being fluidly coupled with the inner injection opening (7.1) via said intermediate chamber (10) or channel.

12. Shut-off device according to anyone of the preceding claims, wherein liquid retarding means (11) or pressure reduction means are provided within the housing (2).

13. Shut-off device according to claim 12, wherein said liquid retarding means (11) or pressure reduction means are formed by a grid comprising multiple elongated holes.

14. Shut-off device according to anyone of the preceding claims, comprising a jet forming portion (12) downstream the deflector portion (6.1), said jet forming portion (12) being adapted to collect the liquid deflected by the deflector portion (6.1).

15. Shut-off device according to anyone of the preceding claims, comprising a quick connector portion (2.2) in order to couple the shut-off device (1) with a water hose.

## Patentansprüche

1. Abschaltvorrichtung zum Füllen eines Behälters mit einer Flüssigkeit, wobei die Abschaltvorrichtung (1) umfasst:
- ein Gehäuse (2) umfassend ein Ventil (3), um einen Flüssigkeitsstrom durch einen Flüssigkeitspfad (4) zu ermöglichen, der innerhalb des Gehäuses (2) vorgesehen ist;
- ein Steuerelement (5) zum Öffnen des Ventils (3), um einen Flüssigkeitsstrom durch den Flüssigkeitspfad (4) zu ermöglichen; und
- einen Schließmechanismus (6) zum automatischen Schließen des Ventils (3) abhängig vom Flüssigkeitsstand im Container;
wobei der Schließmechanismus (6) einen Deflektorabschnitt (6.1) umfasst, der innerhalb des Gehäuses zur Aufnahme eines Flüssigkeitsstrahls angeordnet ist, wobei der Deflektorabschnitt (6.1) mit einem Hebel (6.2) verbunden ist, wobei der Hebel (6.2) operativ mit dem Ventil (3) verbunden ist,
**dadurch gekennzeichnet, dass**
die Abschaltvorrichtung (1) ferner Mittel (7) zur Veränderung des Flüssigkeitsstrahls umfasst, die so ausgelegt sind, dass sie die Kraft des Flüssigkeitsstrahls, der auf den Deflektorteil (6.1) aufgebracht wird, abhängig vom Flüssigkeitsniveau innerhalb des Containers variieren
und wobei der Hebel (6.2) so ausgelegt ist, dass er das Ventil (3) basierend auf der Kraft des Flüssigkeitsstrahls, der auf den Deflektorabschnitt (6.1) aufgebracht wird, steuert.

2. Abschaltvorrichtung nach Anspruch 1, wobei der Hebel (6.2) so angepasst ist, dass er das Ventil (3) in einer offenen Stellung hält, wenn die auf den Deflektorabschnitt (6.1) ausgeübte Kraft über einem bestimmten Schwellenwert liegt.

3. Abschaltvorrichtung nach Anspruch 1 oder 2, wobei das Ventil (3) federbelastet ist, wobei die Feder (6.3) vorgespannt ist, um einen Ventilteil in die geschlossene Stellung zu drücken.

4. Abschaltvorrichtung nach einem der vorhergehenden Ansprüche, wobei der Hebel (6.2) über einen Stößel (6.4) mit dem Ventil (3) verbunden ist.

5. Abschaltvorrichtung nach einem der vorhergehenden Ansprüche, wobei der Hebel (6.2) schwenkbar mit dem Gehäuse (2) verbunden ist.

6. Abschaltvorrichtung nach einem der vorhergehenden Ansprüche, wobei eine Düse (8) innerhalb des Flüssigkeitspfades (4) in Strömungsrichtung vor dem Deflektorteil (6.1) vorgesehen ist.

7. Abschaltvorrichtung nach Anspruch 6, wobei die Düse (8) eine oder mehrere Rippen (8.1) aufweist, die sich in den Düsenkanal erstrecken.

8. Abschaltvorrichtung nach Anspruch 6 oder 7, wobei ein Kanalabschnitt (9) stromabwärts der Düse (8) vorgesehen ist, wobei der Kanalabschnitt (9) eine Breite oder einen Durchmesser (w1) aufweist, die/der größer als die Breite oder der Durchmesser (w2) des Düsenkanals ist.

9. Abschaltvorrichtung nach Anspruch 8, wobei der Kanalabschnitt (9) eine Mischkammer zum Hinzufügen von Luft oder Flüssigkeit zum Flüssigkeitsstrahl durch eine innere Injektionsöffnung (7.1) bildet, die innerhalb der Wand (9.1) der Mischkammer vorgesehen ist.

10. Abschaltvorrichtung nach Anspruch 8 oder 9, wobei eine Zwischenkammer (10) oder ein Kanal zwischen dem Kanalabschnitt (9) und einer äußeren Gehäusewand (2.1) vorgesehen ist.

11. Abschaltvorrichtung nach Anspruch 10, wobei eine äußere Injektionsöffnung (7.2) an der äußeren Gehäusewand (2.1) vorgesehen ist, wobei die äußere Injektionsöffnung (7.2) über die Zwischenkammer (10) oder den Kanal mit der inneren Injektionsöffnung (7.1) fließfähig verbunden ist.

12. Abschaltvorrichtung nach einem der vorhergehenden Ansprüche, wobei im Gehäuse (2) Flüssigkeitsverzögerungsmittel (11) oder Druckreduzierungsmittel vorgesehen sind.

13. Abschaltvorrichtung nach Anspruch 12, wobei die Flüssigkeitsverzögerungsmittel (11) oder Druckreduzierungsmittel durch ein Gitter, das mehrere längliche Löcher umfasst, gebildet werden.

14. Abschaltvorrichtung nach einem der vorhergehenden Ansprüche, umfassend einen strahlbildenden Abschnitt (12) stromabwärts des Deflektorabschnitts (6.1), wobei der strahlbildende Abschnitt (12) so angepasst ist, dass er die durch den Deflektorabschnitt (6.1) abgelenkte Flüssigkeit sammelt.

15. Abschaltvorrichtung nach einem der vorhergehenden Ansprüche, umfassend einen Schnellverbindungsabschnitt (2.2), um die Abschaltvorrichtung (1) mit einem Wasserschlauch zu verbinden.

## Revendications

1. Dispositif d'arrêt pour remplir un récipient avec un liquide, le dispositif d'arrêt (1) comprenant :
- un logement (2) incluant un clapet (3) pour laisser passer un flux de liquides à travers un parcours pour liquides (4) fourni à l'intérieur du logement (2) ;
- un élément de contrôle (5) pour ouvrir le clapet (3) afin de laisser passer un flux de liquides à travers le parcours pour liquides (4) ; et
- un mécanisme de fermeture (6) pour fermer automatiquement le clapet (3) dépendant du niveau de liquide à l'intérieur du récipient ;
dans lequel le mécanisme de fermeture (6) comprend une partie de déflecteur (6.1) disposée à l'intérieur du logement pour recevoir un jet de liquide, ladite partie de déflecteur (6.1) étant couplée à un levier (6.2), ledit levier (6.2) étant couplé de façon opérationnelle au clapet (3),
**caractérisé en ce que**
le dispositif d'arrêt (1) comprend en outre des moyens de variation du jet de liquide (7) configurés pour modifier la force du jet de liquide appliquée sur la partie de déflecteur (6.1) selon le niveau de liquide à l'intérieur du récipient
et dans lequel le levier (6.2) est configuré pour contrôler le clapet (3) sur la base de la force du jet de liquide appliquée sur la partie de déflecteur (6.1).

2. Dispositif d'arrêt selon la revendication 1, dans lequel le levier (6.2) est adapté pour maintenir le clapet (3) dans une position ouverte si la force appliquée sur la partie de déflecteur (6.1) est supérieure à un certain seuil.

3. Dispositif d'arrêt selon la revendication 1 ou 2, dans lequel le clapet (3) est chargé par ressort, le ressort (6.3) étant préchargé pour pousser une partie de clapet dans la position fermée.

4. Dispositif d'arrêt selon l'une quelconque des revendications précédentes, dans lequel le levier (6.2) est couplé au clapet (3) au moyen d'un poussoir (6.4).

5. Dispositif d'arrêt selon l'une quelconque des revendications précédentes, dans lequel le levier (6.2) est couplé de manière pivotante au logement (2).

6. Dispositif d'arrêt selon l'une quelconque des revendications précédentes, dans lequel une buse (8) est fournie à l'intérieur du parcours (4) dans la direction du flux en amont de la partie de déflecteur (6.1).

7. Dispositif d'arrêt selon la revendication 6, dans lequel la buse (8) comprend des rainures (8.1) s'étendant dans le canal de la buse.

8. Dispositif d'arrêt selon la revendication 6 ou 7, dans lequel une partie du canal (9) est fournie en aval de la buse (8), la partie du canal (9) comprenant une largeur ou un diamètre (w1) supérieure à la largeur ou au diamètre (w2) du canal de la buse.

9. Dispositif d'arrêt selon la revendication 8, dans lequel la partie du canal (9) forme une chambre de mélange pour ajouter de l'air ou du liquide au jet de liquide à travers une ouverture d'injection interne (7.1) fournie à l'intérieur de la paroi (9.1) de la chambre de mélange.

10. Dispositif d'arrêt selon la revendication 8 ou 9, dans lequel une chambre intermédiaire (10) ou canal est fournie entre la partie du canal (9) et une paroi du logement externe (2.1).

11. Dispositif d'arrêt selon la revendication 10, dans lequel une ouverture d'injection externe (7.2) est fournie en correspondance de la paroi du logement externe (2.1), ladite ouverture d'injection externe (7.2) étant couplée de manière fluidique à l'ouverture d'injection interne (7.1) au moyen de ladite chambre (10) intermédiaire ou canal.

12. Dispositif d'arrêt selon l'une quelconque des revendications précédentes, dans lequel des moyens de rétention du liquide (11) ou des moyens de réduction de la pression sont fournis à l'intérieur du logement (2).

13. Dispositif d'arrêt selon la revendication 12, dans lequel les moyens de rétention du liquide (11) ou les moyens de réduction de la pression sont constitués d'une grille comprenant multiples perforations allongées.

14. Dispositif d'arrêt selon l'une quelconque des revendications précédentes, comprenant une partie de formation du jet (12) en aval de la partie de déflecteur (6.1), ladite partie de formation du jet (12) étant adaptée pour recueillir le liquide dévié par la partie de déflecteur (6.1).

15. Dispositif d'arrêt selon l'une quelconque des revendications précédentes, comprenant une partie de raccord rapide (2.2) afin de coupler le dispositif d'arrêt (1) au tuyau d'eau.
